**Europäisches Patentamt**

**European Patent Office**

**Office européen des brevets**

(19)

(11) Veröffentlichungsnummer: **0 156 009**
**B1**

# (12) EUROPÄISCHE PATENTSCHRIFT

(45) Veröffentlichungstag der Patentschrift:
**27.09.89**

(21) Anmeldenummer: **84114908.1**

(22) Anmeldetag: **07.12.84**

(51) Int. Cl.⁴: **B 60 B 21/10**, B 60 C 15/02

(54) **Fahrzeugrad.**

(30) Priorität: **19.03.84 DE 3410048**

(43) Veröffentlichungstag der Anmeldung:
**02.10.85 Patentblatt 85/40**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**DE-A- 2 358 358**
**DE-C- 729 819**
**FR-A- 333 125**
**FR-A- 345 675**
**FR-A- 644 915**
**FR-A- 2 436 027**
**GB-A- 206 799**

(73) Patentinhaber: **Continental Aktiengesellschaft,
Königsworther Platz 1, D-3000 Hannover 1 (DE)**

(72) Erfinder: **Howind, Volker, Ing., Ulmenweg 11,
D-3002 Wedemark 8 (DE)**

## Beschreibung

Die Erfindung betrifft ein luftbereiftes Fahrzeugrad, insbesondere ein Rad für Lastkraftwagen, mit einer starren Felge und mit einem Reifen aus Gummi oder gummiähnlichen Kunststoffen, dessen Karkasse in den Wülsten durch Umschlingen von zugfesten Wulstkernen verankert ist, bei dem die Reifenwülste am radial inneren Umfang des Felgenkranzes angeordnet sind, und wobei sich radial innen vom Wulst ein Klemmring befindet.

Ein solches Fahrzeugrad, das jedoch bisher vornehmlich für Personenkraftwagen ausgelegt war, ist z.B. aus der DE-A-3 019 742 bekannt. Zur Montage des Reifens dient beim bekannten Fahrzeugrad ein Hochbett, in das ein Reifenwulst mit einem Umfangsabschnitt hineingedrückt wird, um auf der anderen Seite über das Felgenhorn gehoben werden zu können.

Bei Fahrzeugrädern für Lastkraftwagen, die wesentlich höheren Belastungen ausgesetzt sind, werden üblicherweise in den Reifen sehr steife Wulstkerne aus Stahlkabeln mit großen Kernquerschnitten verwendet, die eine manuelle Verformung nur in sehr kleinem Umfang zulassen. Ein solcher LKW-Reifen wäre bei einem Rad der eingangs genannten Art ohne maschinelle Kraftunterstützung allenfalls unter größten Schwierigkeiten zu montieren.

Weiterhin ist durch die FR-A-333 125 ein Fahrzeugrad bekannt, bei dem ein Reifen mit seinen Wülsten am radial inneren Umfang einer einteiligen Felge neben sich nach radial innen erstreckenden Felgenhörnern angeordnet ist. Die Wülste sind als Gummiverdickungen ohne zugfeste Wulstkerne in Form metallischer Drahteinlagen ausgebildet, so daß in der Umfangslänge veränderbare Klemmringe die Funktion der Wulstkerne übernehmen. Wegen des im Reifeninneren befindlichen Gummischlauches ist das Fahrzeugrad für einen Notlauf nicht geeignet.

Der Erfindung liegt die Aufgabe zugrunde, ein gattungsgemäßes Fahrzeugrad anzugeben, das für die Verwendung an Lastkraftwagen und anderen schweren Fahrzeugen geeignet ist, bei dem der Reifen auf einfachste Weise montierbar ist und bei dem der Reifen zur Erzielung guter Fahreigenschaften an der radial inneren Seite des Felgenkranzes befestigt ist und die Reifenwand die Felge sehr flach verläßt.

Diese Aufgabe wird erfindungsgemäß dadurch gelöst, daß die Felgensitzfläche für jeden Wulst in Querrichtung im wesentlichen zylindrisch verläuft und sich bis zum Rand des Felgenkranzes erstreckt, daß die am Wulst anliegende Klemmfläche des Klemmrings kegelstumpfförmig zur Rotationsachse des Rades verläuft und daß der Wulstkern eine Querschnittsfläche mit im wesentlichen parallel zur Klemmfläche des Klemmrings und parallel zur Felgensitzfläche verlaufenden Seiten aufweist.

Mit der Erfindung ist es wegen des Verzichts auf ein übliches Felgenhorn ohne jede Schwierigkeit möglich, den Reifen mit seinen Wülsten auf die vorgesehenen Sitzflächen der Felge zu bringen.

Durch einfaches Festschrauben von Klemmringen werden die Wülste dort fixiert, gegebenenfalls kann es auch ausreichen, die Klemmringe mit Hilfe eines Sprengrings zu halten, weil der Wulst sich durch den Reifeninnendruck von allein in eine dichtende Position zieht.

Gemäß einer vorteilhaften Ausgestaltung der Erfindung wird der Klemmring so fest angeschraubt, daß bereits beim luftleeren Reifen eine Vorspannung an den Reifenwülsten erzeugt wird, die eine Beanspruchung der Reifenwülste auf Zug zur Folge hat, wenn man für den Durchmesser der Felgensitzfläche einen genügend großen Wert wählt. Diese Vorspannung in Verbindung mit der Kraftkomponente, die sich aufgrund des Reifeninnendrucks aufbaut, sorgt zuverlässig dafür, daß der Wulstkern im Fahrbetrieb zu keiner Zeit auf Druck beansprucht wird. Die ausschließlich auftretende Zugbeanspruchung ist für den Wulstkern im Gegensatz zu einer Druckbeanspruchung (Stauchen) jedoch unschädlich.

Das erfindungsgemäße Fahrzeugrad weist außer guten Fahreigenschaften im Normalbetrieb auch vorzügliche Notlaufeigenschaften auf, d. h. es kann im Falle einer Panne noch in erheblichem Umfang gefahren werden, ohne daß der Reifen dauerhaften Schaden nimmt. Diese guten Notlaufeigenschaften werden vor allem dadurch erreicht, daß der Reifen bei einem Druckverlust nach seitlich ausbauchen und sich mit seinem Zenitbereich auf Stützflächen der Felge abstützen kann. Im Falle vorgespannter Wulstkerne können darüber hinaus auch bei luftleerem Reifen noch hohe Traktionskräfte übertragen werden.

Nachfolgend werden mehrere Ausführungsbeispiele der Erfindung anhand einer Zeichnung näher erläutert.

Es zeigt

Fig. 1 ein Fahrzeugrad für Lastkraftwagen mit einer ersten Felge in einem radialen Teilschnitt,

Fig. 2 einen Ausschnitt des Fahrzeugrads gemäß Fig. 1 im axial äußeren Felgenkranzbereich,

Fig. 3 ein Fahrzeugrad mit einem Klemmring, der von einem Sprengring gehalten wird, in einem radialen Teilschnitt,

Fig. 4 ein Fahrzeugrad für Lastkraftwagen mit einer zweiten Felge in einem radialen Teilschnitt.

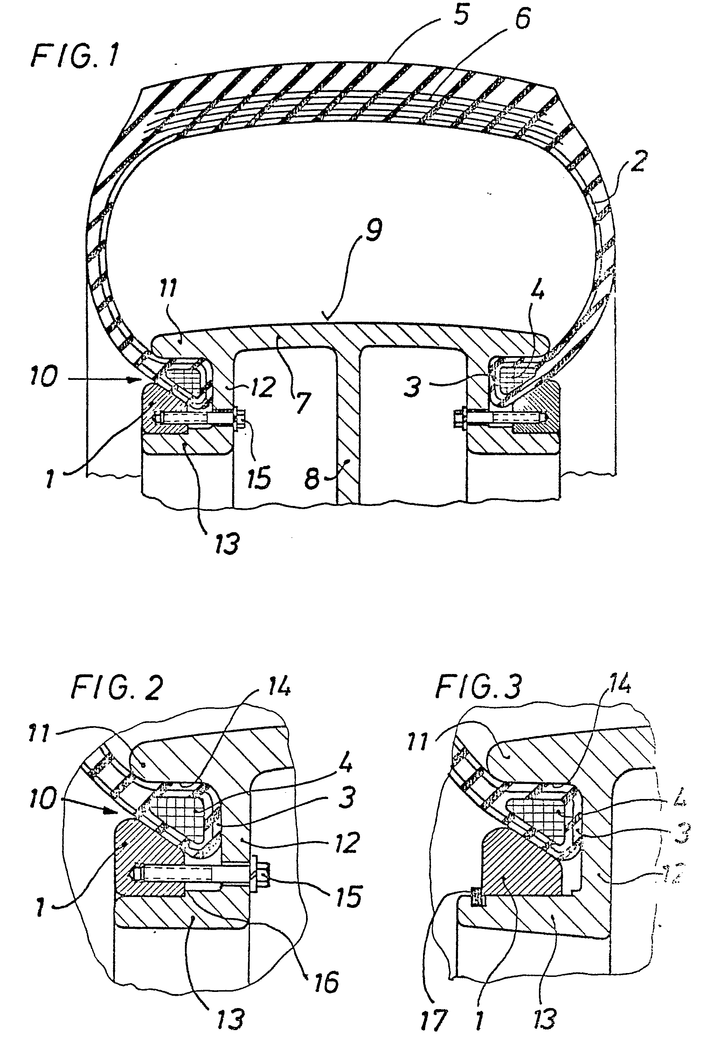

Das Fahrzeugrad gemäß Fig. 1 besteht aus einer einteiligen starren Felge mit zwei angeschraubten Klemmringen 1 und einem Reifen, der überwiegend aus Gummi oder gummiähnlichen Kunststoffen aufgebaut ist. Eine Radialkarkasse 2 aus bevorzugt metallischen Festigkeitsträgern, gegebenenfalls kann es auch eine Winkelkarkasse sein, ist in den Wülsten 3 durch Umschlingen von zugfesten Wulstkernen 4 verankert. Zwischen dem Laufstreifen 5 und der Karkasse 2 befindet sich ein aus mehreren Gewebelagen bestehender Gürtel 6.

Der Felgenkranz 7, der im Querschnitt eine schwach konvexe Kontur aufweist, ist unlösbar mit einer Radscheibe 8 verbunden. Die konvexe Außenfläche des Felgenkranzes 7 dient als Stützfläche 9 für die Zenitpartie des Reifens bei einem Notlauf. Bei Bedarf kann die Stützfläche 9 in ihrem mittleren Bereich einen vergrößerten Durchmesser aufweisen. Axial außen befindet sich am Felgenkranz 7 eine im Querschnitt etwa rechteckförmige Ausnehmung 10, die dreiseitig von einem radial außen liegenden Teil 11 des Felgenkranzes 7, einem radial (senkrecht) verlaufenden Felgenteil 12 und einem radial innen im wesentlichen zylindrisch (waagerecht) verlaufenden ringförmigen Felgenteil 13 begrenzt ist. Die radial innere Fläche des äußeren Felgenkranzteils 11, die in Querrichtung ebenfalls etwa zylindrisch (waagerecht) verläuft, dient als Sitzfläche 14 für den im Querschnitt etwa dreieckförmigen Reifenwulst 3. Die Querneigung der Sitzfläche 14 sollte innerhalb eines Bereichs von 0 bis 15° liegen.

Der Reifenwulst 3 wird von dem Klemmring 1 in Betriebsstellung gehalten, der an dem ringförmigen Felgenteil 13 anliegt und an dem radial (senkrecht) verlaufenden Felgenteil 12 angeschraubt ist (Fig. 1 und in einem vergrößerten Ausschnitt Fig. 2). Bei Bedarf können die Schrauben 15 auch von außen durch den Klemmring 1 geführt sein. Ein Anschlag 16 sorgt dafür, daß der Klemmring 1 den Reifenwulst 3 nicht unerlaubt stark quetschen kann.

Der Wulstkern 4 weist ebenso wie der ganze Reifenwulst 3 bevorzugt einen Querschnitt in Form eines rechtwinkligen Dreiecks auf, bei dem die Ecken abgerundet sind. Wichtig für eine optimale Klemmung des Reifenwulstes 3 ist, daß die dem Klemmring 1 zugewandte Fläche des Wulstkerns 4 (Hypotenuse des Querschnittdreiecks) parallel zu der Klemmringfläche verläuft, die am Reifenwulst 3 anliegt, und daß die dem äußeren Felgenkranzteil 11 zugewandte Fläche des Wulstkerns 4 parallel zur Sitzfläche 14 für den Reifenwulst 3 verläuft.

Eine besonders hohe Belastbarkeit des Reifens ergibt sich, wenn durch das relativ starke Anschrauben des Klemmrings 1 bereits bei drucklosem Reifen eine Kraftkomponente auf den Reifenwulst 3 und damit auf den Wulstkern 4 erzeugt wird, die etwa diagonal nach radial außen und axial innen gerichtet ist und die eine Zugbeanspruchung des Wulstkerns 4 zur Folge hat. Zur Erzeugung dieser Kraftkomponente ist jedoch darauf zu achten, daß der Durchmesser der Felgensitzfläche 14 genügend groß gewählt wird, so daß nach dem Spannen des Klemmrings 1 nicht eine allseitig gleiche Kraft auf den Reifenwulst 3 drückt. Nach dem Aufpumpen des Reifens erfolgt eine weitere Zugbeanspruchung des Reifenwulstes 3 und damit des Wulstkerns 4 in Richtung der Reifenwand, d.h. überwiegend nach axial außen und geringfügig nach radial außen. Ohne die oben geschilderte künstliche Kraftkomponente sind Fahrsituationen denkbar, z.B. ein stark eingefederter Zustand, in denen der Zug auf den Wulstkern 4 auch eine nach radial innen gerichtete Komponente aufweist, die eine unerwünschte Stauchung des Wulstkerns 4 zur Folge hätte. Die künstlich erzeugte zusätzliche Kraftkomponente verhindert jedoch zuverlässig schädliche Auswirkungen derartiger nach radial innnen gerichteter Komponenten durch Überkompensation.

Das Fahrzeugrad gemäß Fig. 3 unterscheidet sich von dem nach Fig. 2 dadurch, daß der Klemmring 1 mit Hilfe eines Sprengrings 17 am Reifenwulst gehalten wird. Alle anderen Konstruktionsmerkmale für Felge und Reifen gelten entsprechend dem vorstehend beschriebenen Beispiel.

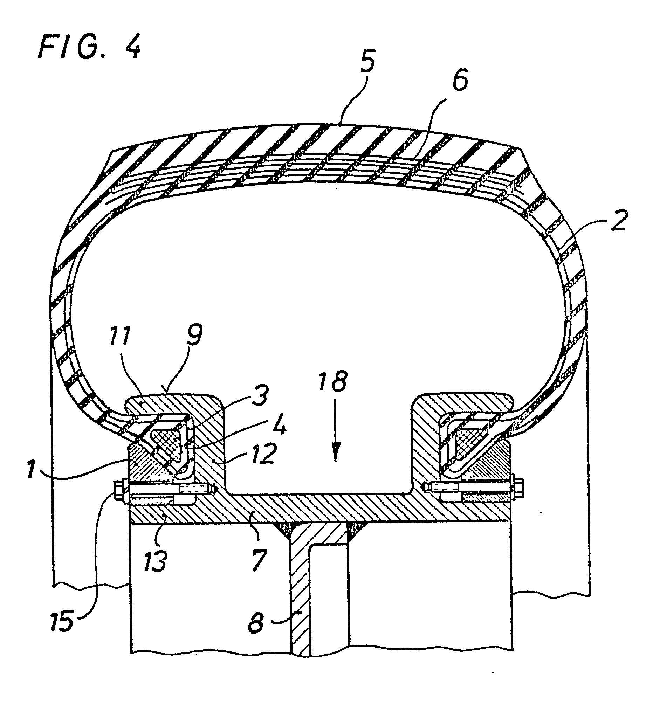

Das Fahrzeugrad nach Fig. 4 unterscheidet sich von dem der Fig. 1 durch einen unterschiedlichen Felgenaufbau, während der Reifen identisch ist. Die Felge ist radial außen mit verkleinerten Stützflächen 9 und mit einem üblichen Tiefbett 18 versehen. Die seitlichen Tiefbettwände 12' dienen gleichzeitig als Begrenzungswand für jede Ausnehmung 10 und nehmen die Schrauben 15 zur Befestigung der Klemmringe 1 auf. Alle anderen Konstruktionsmerkmale gelten entsprechend den unter Fig. 1 beschriebenen.

Es sollte darauf hingewiesen werden, daß für eine Montage des Reifens auf eine einteilige Felge nach Fig. 1 gemäß einem bei der Anmelderin praktizierten Verfahren die Felge zunächst senkrecht zum Reifen auf diesen zubewegt wird, bis sie sich im Reifeninnenraum befindet, und daß anschließend durch eine Drehung des Reifens oder der Felge die Rotationsachsen von Reifen und Felge in Parallelstellung gebracht werden.

## Patentansprüche

1. Luftbereiftes Fahrzeugrad, insbesondere Rad für Lastkraftwagen, mit einer einteiligen, starren Felge und mit einem Reifen aus Gummi oder gummiähnlichen Kunststoffen, dessen Karkasse (2) in den Wülsten (3) durch Umschlingen von zugfesten Wulstkernen (4) verankert ist, bei dem die Wülste (3) am radial inneren Umfang des Felgenkranzes (7) angeordnet sind, und wobei sich radial innen vom Wulst (3) ein Klemmring (1) befindet, dadurch gekennzeichnet, daß die Felgensitzfläche (14) für jeden Wulst (3) in Querrichtung im wesentlichen zylindrisch verläuft und sich bis zum Rand des Felgenkranzes (7) erstreckt, daß die am Wulst (3) anliegende Klemmfläche des Klemmrings (1) kegelstumpfförmig zur Rotationsachse des Rades verläuft und daß der Wulstkern (4) eine Querschnittsfläche mit im wesentlichen parallel zur Klemmfläche des Klemmrings (1) und parallel zur Felgensitzfläche (14) verlaufenden Seiten aufweist.

2. Fahrzeugrad nach Anspruch 1, dadurch gekennzeichnet, daß der Wulst (3) axial innen an einem im wesentlichen radial verlaufenden Felgenteil (12) anliegt.

3. Fahrzeugrad nach Anspruch 1 oder 2, dadurch gekennzeichnet, daß der Klemmring (1) an dem radial verlaufenden Felgenteil (12) so fest angeschraubt ist, daß er bereits bei drucklosem Reifen eine Vorspannung auf den Wulst (3) ausübt, die etwa diagonal nach radial außen und axial innen gerichtet ist.

4. Fahrzeugrad nach Anspruch 1 und 2, dadurch gekennzeichnet, daß der Wulst (3) und der Klemmring (1) sich in einer Ausnehmung (10) befinden, die dreiseitig von der radial außen liegenden Felgensitzfläche (14) im Felgenkranz (11), vom radial verlaufenden Felgenteil (12, 12') und von einem radial innen im wesentlichen zylindrisch verlaufenden ringförmigen Felgenteil (13) begrenzt ist.

5. Fahrzeugrad nach Anspruch 4, dadurch gekennzeichnet, daß der Klemmring (1) an dem ringförmigen Felgenteil (13) anliegt.

6. Fahrzeugrad nach den Ansprüchen 1, 3 und 5, dadurch gekennzeichnet, daß das ringförmige Felgenteil (13) einen Sicherheitsanschlag (16) für den Klemmring (1) aufweist.

7. Fahrzeugrad nach den Ansprüchen 1, 4 und 5, dadurch gekennzeichnet, daß ein in einer Nut des ringförmigen Felgenteils (13) befindlicher Sprengring (17) den Klemmring (1) sichert.

8. Fahrzeugrad nach Anspruch 1, dadurch gekennzeichnet, daß die Außenfläche des Felgenkranzes (7) als Stützfläche (9) für den Reifen bei einem Notlauf ausgebildet ist.

9. Felge für ein Fahrzeugrad nach Anspruch 1, dadurch gekennzeichnet, daß der Felgenkranz (7) seitlich außen eine Ausnehmung (10) aufweist, die dreiseitig von der radial außen liegenden etwa zylindrischen Felgensitzfläche (14) im Felgenkranzteil (11), von einem radial verlaufenden Felgenteil (12, 12') und von einem radial innen im wesentlichen zylindrisch verlaufenden ringförmigen Felgenteil (13) begrenzt ist.

## Claims

1. Vehicle wheel fitted with a pneumatic tyre, more especially a wheel for heavy goods vehicles, comprising a one-piece, rigid rim and a tyre formed from rubber or rubber-like plastics materials, the carcase (2) of said tyre being secured in the beads (3) by being looped around substantially inextensible bead cores (4), wherein the beads (3) are disposed on the radially internal circumference of the rim ring (7), and wherein a clamping ring (1) is situated radially internally of the bead (3), characterised in that the rim seating surface (14) for each bead (3) extends substantially cylindrically in the transverse direction and extends to the edge of the rim ring (7), in that the clamping surface of the clamping ring (1), which abuts against the bead (3), extends in a frustoconical manner relative to the axis of rotation of the wheel, and in that the bead core (4) has an area of cross-section with sides which extend substantially parallel to the clamping surface of the clamping ring (1) and parallel to the rim seating surface (14).

2. Vehicle wheel according to claim 1, characterised in that the bead (3) abuts axially internally against a rim portion (12), which extends substantially radially.

3. Vehicle wheel according to claims 1 and 2, characterised in that the clamping ring (1) is so securely screw-connected to the radially extending rim portion (12) that it exerts a pre-stressing action upon the bead (3), even when the tyre is pressureless, such action being directed substantially diagonally in a radially outward and axially inward manner.

4. Vehicle wheel according to claims 1 and 2, characterised in that the bead (3) and the clamping ring (1) are situated in a recess (10), which is defined on three sides by the radially external rim seating surface (14) in the rim ring (11), by the radially extending rim portion (12, 12'), and by an annular rim portion (13), which extends substantially cylindrically radially internally.

5. Vehicle wheel according to claim 4, characterised in that the clamping ring (1) abuts against the annular rim portion (13).

6. Vehicle wheel according to claims 1, 3 and 5, characterised in that the annular rim portion (13) has a safety stop member (16) for the clamping ring (1).

7. Vehicle wheel according to claims 1, 4 and 5, characterised in that a spring ring (17), situated in a groove in the annular rim portion (13), secures the clamping ring (1).

8. Vehicle wheel according to claim 1, characterised in that the external surface of the rim ring (7) is formed as supporting face (9) for supporting the tyre during emergency running.

9. Rim for a vehicle wheel according to claim 1, characterised in that the rim ring (7) is provided laterally externally with a recess (10), which is defined on three sides by the radially external, substantially cylindrical rim seating surface (14) in the rim ring portion (11), by a radially extending rim portion (12, 12'), and by an annular rim portion (13), which extends substantially cylindrically radially internally.

## Revendications

1. Roue de véhicule équipée d'un pneumatique, en particulier, roue pour véhicule utilitaire, comprenant une jante en une seule pièce, rigide, et un pneumatique en caoutchouc ou en matières plastiques analogues au caoutchouc, dont la carcasse (2) est ancrée dans les talons (3) par retournement autour de tringles (4) résistantes à la traction, roue dans laquelle les talons (3) sont disposés contre la circonférence radialement intérieure de la couronne (7) de la jante, et dans laquelle un anneau de serrage (1) est disposé dans une position radialement intérieure par rapport au talon (3), caractérisée en ce que la surface de repos de la jante (14) qui reçoit chaque talon (3) est d'une conformation sensiblement cylindrique dans la direction transversale et s'étend jusqu'au bord de la couronne (7) de la jante, en ce que la surface de serrage de l'anneau de serrage (1) qui est en appui contre le talon (3) est de forme tronconique au regard de l'axe de rotation de la roue, et en ce que la tringle (4) du talon présente une surface de section transversale qui comporte des côtés orientés sensiblement parallèlement à la surface de serrage de l'anneau de serrage (1) et parallèlement à la surface de repos (14) de la jante.

2. Roue de véhicule selon la revendication 1, caractérisée en ce que le talon (3) est en appui axialement vers l'intérieur contre une partie (12) de la jante qui est orientée sensiblement radialement.

3. Roue de véhicule selon les revendications 1 et 2, caractérisée en ce que l'anneau de serrage (1) est serré suffisamment fortement par les vis contre la partie (12) de la jante qui est orientée radialement pour exercer sur le talon (3), même lorsque le pneumatique est dégonflé, une précontrainte qui est dirigée à peu près en diagonale, radialement vers l'extérieur et axialement vers l'intérieur.

4. Roue de véhicule selon les revendications 1 et 2, caractérisée en ce que le talon (3) et l'anneau de serrage (1) se trouvent dans un évidement (10) qui est limité sur trois côtés par la surface de repos (14) de la jante située dans la couronne (11) de la jante et qui est située radialement à l'extérieur, par la partie (12, 12') de la jante qui est orientée radialement, et par une partie annulaire (13) de la jante qui est située radialement à l'intérieur et est d'une conformation sensiblement cylindrique.

5. Roue de véhicule selon la revendication 4, caractérisée en ce que l'anneau de serrage (1) est appuyé contre la partie annulaire (13) de la jante.

6. Roue de véhicule selon les revendications 1, 3 et 5, caractérisée en ce que la partie annulaire (13) de la jante présente une butée de sécurité (16) pour arrêter l'anneau de serrage (1).

7. Roue de véhicule selon les revendications 1, 4 et 5, caractérisée en ce qu'une bague d'arrêt (17), qui se trouve dans une gorge de la partie annulaire (13) de la jante, verrouille l'anneau de serrage (1).

8. Roue de véhicule selon la revendication 1, caractérisée en ce que la surface externe de la couronne (7) de la jante est réalisée sous la forme d'une surface de portée (9) pour le pneumatique en cas de roulement en secours.

9. Jante pour une roue de véhicule selon la revendication 1, caractérisée en ce que la couronne (7) de la jante présente latéralement à l'extérieur un évidement (10) qui est limité sur trois côtés par la surface de repos (14) de la jante située dans la couronne (11) de la jante et qui est située radialement à l'extérieur, par la partie (12, 12') de la jante qui est orientée radialement, et par une partie annulaire (13) de la jante qui est située radialement à l'intérieur et est d'une conformation sensiblement cylindrique.

FIG.1

FIG.2

FIG.3

FIG. 4